# FASCICULE DE BREVET EUROPEEN

(11) **EP 3 535 139 B1**
(45) Date de publication et mention de la délivrance du brevet: **05.05.2021**
(21) Numéro de dépôt: 17804233.9
(22) Date de dépôt: 31.10.2017
(51) Int. Cl.: B60C 11/04, B60C 11/12, B60C 11/03

(54) **BANDE DE ROULEMENT COMPORTANT UN BLOC ALLONGE PRESENTANT UNE PLURALITE DE DECOUPURES**
LAUFFLÄCHE MIT EINEM LANGEN PROFILBLOCK MIT EINER VIELZAHL VON ZUSCHNITTEN
TREAD COMPRISING A LONG TREAD BAR HAVING A PLURALITY OF CUT-OUTS

(30) Priorité: 03.11.2016 FR 1660635
(43) Date de publication de la demande: 11.09.2019
(73) Titulaire: Compagnie Générale des Etablissements Michelin, 63000 Clermont-Ferrand (FR)
(72) Inventeur: DURAND-GASSELIN, Benoit, 63040 Clermont-Ferrand Cedex 9 (FR); MUHLHOFF, Olivier, 63040 Clermont-Ferrand Cedex 9 (FR)
(74) Mandataire: Lasson, Cédric Yves
(86) Numéro de dépôt international: PCT/FR2017/052997
(87) Numéro de publication internationale: WO 2018/083414

(56) Documents cités:
- WO-A1-2013/002801
- WO-A1-2013/007745
- JP-A- 2008 260 423
- JP-A- 2009 166 762
- US-A1- 2011 220 258

## Description

### DOMAINE DE L'INVENTION

La présente invention concerne une bande de roulement d'un pneumatique pour véhicule automobile pourvu de moyens pour réduire de façon sensible le bruit en roulage.

### ETAT DE LA TECHNIQUE

Une bande de roulement d'un pneumatique comporte de manière connue un ensemble de découpes dont l'objectif est d'améliorer l'adhérence du pneumatique, en particulier sur sol mouillé. De telles découpures sont des rainures et/ou des incisions.

Il est également connu que la présence de découpures dans une bande de roulement peut être source de bruit lié entre autres à des vibrations de l'air circulant dans les rainures, notamment dans la zone de contact avec la chaussée ou à une répartition non optimale des incisions lors du roulage.

Avec le développement de véhicules de plus en plus silencieux, en particuliers les véhicules électriques, un tel bruit devient gênant.

Une solution est proposée par le document WO2015067644, qui divulgue une bande de roulement comportant une pluralité d'incisions agencées de manière à limiter le bruit pouvant être généré par ces incisions.

Cependant, il a été constaté que dans certaines conditions de roulage, les blocs en matériau caoutchoutique comportant de telles incisions produisent du bruit en partie dû au martellement des blocs de matériau caoutchoutique les constituants en entrée d'aire de contact, lorsque ceux-ci se posent sur le sol.

En effet, chaque paire d'incisions successives forme un sous-bloc de matière de la bande de roulement. Lors d'un roulage du pneumatique, chaque sous-bloc passe par une phase de forte pression de contact avec le sol, puis par une phase dite d'échappement dans laquelle la pression de contact diminue, juste avant que le sous-bloc quitte le sol. Dans cette phase d'échappement une portion de chaque sous-bloc glisse sur le sol.

Comme les blocs se situant dans le sol sont comprimés, ils perdent de la hauteur. Les blocs arrivant à l'entrée de l'aire de contact ayant une hauteur plus importante, ils frappent donc le sol avant leur mise en compression, ceci engendre donc du bruit.

Ce problème est encore accentué sur les bandes de roulement des pneus moderne qui ont des modules de plus en plus faibles, et donc une perte de hauteur plus importante.

Les documents WO2013002801 et US2011220258 proposent également une bande de roulement présentant un agencement particulier de rainures sur la bande de roulement.

L'invention a donc pour objectif de diminuer le bruit émis par le martellement des blocs de matériau caoutchoutique lors d'un roulage du pneumatique.

### DEFINITIONS

Dans la description suivante on s'attache aux définitions suivantes :
- Par « **pneumatique** », on entend tous les types de bandages élastiques soumis à une pression interne ou non.
- Par « **bande de roulement** » d'un pneumatique, on entend une quantité de matériau caoutchoutique délimitée par des surfaces latérales et par deux surfaces principales dont l'une est destinée à entrer en contact avec une chaussée lorsque le pneumatique roule.
- Par « **surface de la bande de roulement** », on entend l'ensemble des points de la bande de roulement qui sont en contact avec la chaussée lorsque le pneumatique, gonflé à sa pression de référence roule sur cette chaussée. La pression de gonflage de référence est définie dans les conditions d'utilisation du pneumatique telles que définies notamment par la norme E.T.R.T.O (« European Tyre and Rim Technical Organisation »). La largeur C de la surface de la bande de roulement est notamment définie par la norme ETRTO tel que C= (1.075-0.005ar)*S1.001 avec ar le rapport nominal d'aspect et s la grosseur du boudin théorique sur une jante de mesure.
- Par « **bloc »** sur une bande de roulement, on entend un élément en relief délimité par des rainures et comprenant des parois latérales et une face de contact, cette dernière étant destinée à venir en contact avec le sol au cours d'un roulage.
- Par **« bloc allongé** », on entend un bloc présentant une largeur et une longueur sur la circonférence du pneumatique, cette longueur étant très supérieure à la largeur.
- Par « **rainure** », on entend une découpure dans la bande de roulement délimitant des parois de matière, la largeur, correspondant à l'espacement entre les parois de cette découpure est telle que les parois associées à cette découpure ne peuvent pas venir en contact l'une contre l'autre dans des conditions usuelles de roulage. La largeur pour une rainure est supérieure à 2 millimètres.
- Par « **incision** », on entend une découpure dans la bande de roulement délimitant des parois de matière, la largeur correspondant à l'espacement entre les parois de cette découpure est appropriée pour permettre la mise en contact, au moins partielle, des parois de l'incision lors du passage dans l'aire de contact entre le pneumatique et le sol. La largeur pour une incision est inférieure ou égale à 2 millimètres.
- Par « **découpure** », on entend une rainure ou une incision.
- Par « **direction transversale** » ou « direction axiale », on entend une direction parallèle à l'axe de rotation du pneu.
- Par « **direction circonférentielle** », on entend une direction qui est tangente à tout cercle centré sur l'axe de rotation du pneumatique. Cette direction est perpendiculaire à la direction axiale.
- Par « **direction oblique** », on entend une direction qui possède une composante axiale et une composante circonférentielle non nulles.
- Par « **niveau circonférentiel** », on entend un ensemble de points formant une droite, cette droite étant perpendiculaire à la direction circonférentielle.

### RESUME DE L'INVENTION

L'invention porte sur une bande de roulement pour pneumatique comportant au moins un bloc allongé en matériau caoutchoutique de largeur W et de longueur L où L est d'au moins 5 fois W, ce bloc allongé s'étendant selon une direction circonférentielle lorsque la bande de roulement est montée sur le pneumatique, chaque bloc allongé comportant une surface de contact destinée à venir en contact avec un sol et une première paroi latérale et une seconde paroi latérale délimitant cette surface de contact, le bloc allongé comportant une pluralité d'incisions obliques successives au nombre de N, et ayant chacune une première extrémité et une deuxième extrémités, au moins l'une de la première extrémité et de la deuxième extrémité, débouche sur la première ou la deuxième paroi latérale. En outre, les incisions se succèdent longitudinalement sur la surface de contact de manière qu'au moins l'une des extrémités de l'une des incisions est au même niveau circonférentiel x sur le bloc allongé qu'une extrémité d'une autre incision circonférentiellement adjacente à ladite une des incisions, un faible décalage entre la position circonférentielle des incisions étant limité à 5% du pas entre les deux incisions. De plus, à partir d'une certaine profondeur dans la bande de roulement, les incisions s'élargissent au moins partiellement.

Par profondeur de la bande de roulement on entend la profondeur mesurée suivant une coupe circonférentielle le long de cette bande de roulement.

L'invention propose ainsi, d'une part, d'assurer une continuité dans l'organisation des incisions dans le bloc allongé. En effet, au moins l'une des extrémités de l'une des incisions est au même niveau circonférentiel sur le bloc allongé qu'une extrémité d'une autre incision. En d'autres termes, lorsqu'une incision atteint une de ses extrémités, une autre incision débute à un même niveau circonférentiel. De cette manière, on limite la variation du taux d'entaille ment selon la direction circonférentielle dans le bloc allongé et les performances acoustiques du pneumatique sont alors améliorées.

D'autre part, selon l'invention, à partir d'une certaine profondeur dans la bande de roulement, les incisions s'élargissent au moins partiellement.

Ainsi, la forme géométrique des faces d'attaque des blocs de matière formés par chaque paire d'incision est modifiée de manière à abaisser localement leur rigidité radiale. La rigidité radiale étant plus faible, la force d'impact à l'origine du bruit est réduite, donc le bruit du pneu est abaissé.

En outre cela permet d'agir sur la réduction de bruit à déférents niveau d'usure du pneumatique.

Avantageusement, l'élargissement se fait sur une unique portion de l'incision de manière à abaisser la rigidité radiale de manière continue sur la totalité de la portion. Ainsi, on réduit la force d'impact sur la totalité de la portion, voir la totalité de l'incision si l'élargissement est sur toute sa longueur. Il en résulte une efficacité accrue en réduction de bruit.

Avantageusement, les incisions s'élargissent pour former des rainures et au moins une extrémité de l'une des rainures est en regard sur le bloc allongé d'une extrémité d'une autre rainure.

En d'autres termes, à partir d'un certain niveau d'usure de la bande de roulement, les incisions deviennent des rainures.

On améliore ainsi l'écoulement de l'eau hors de la bande de roulement lorsque le pneumatique roule sur un sol mouillé.

De plus, une continuité dans l'organisation des rainures résultantes est assurée. Ainsi, la variation du taux d'entaillement selon la direction circonférentielle est limitée.

Selon une réalisation de l'invention, les incisions ne sont pas élargies à leur première extrémité et/ou à leur deuxième extrémité.

Cela permet d'améliorer le freinage sur sol sec.

Selon une variante, les incisions sont élargies dans une moitié de leur longueur.

Cela permet également d'améliorer le freinage sur sol sec.

Selon une autre variante, l'élargissement est alterné entre deux incisions se succédant longitudinalement sur la surface de contact.

On améliore également le freinage sur sol sec.

Avantageusement, la largeur des incisions est au moins doublée dans leur partie élargie.

Améliorer le freinage sur sol mouillé à partir d'un certain niveau d'usure.

Avantageusement, l'élargissement des incisions est progressif.

Cela permet une usure homogène.

Avantageusement, l'élargissement des incisions est asymétrique.

Ceci permet de régler la circonférence de roulement des blocs de matériau caoutchoutique entre eux, et en conséquence l'usure entre les blocs est homogène.

Avantageusement, la dureté du mélange de surface constituant les blocs en matériaux caoutchoutique est inférieure à 80 shore, préférentiellement inférieure à 70 shore, plus préférentiellement comprise entre 50 et 65 shore.

Avantageusement, la largeur minimum entre faces opposées d'une même incision sur sa moitié supérieure est comprise entre 0,2 mm et 1 mm, préférentiellement entre 0,4 et 0,6 mm lorsque le pneu est monté et gonflé.

Avantageusement, la largeur maximale entre faces opposées d'une même incision est comprise entre 1 mm et 10 mm, préférentiellement entre 2 et 5mm.

Selon un exemple de réalisation, au moins une incision présente une profondeur radiale maximale comprise entre 50% et 100% de la hauteur de la première et/ou la deuxième paroi latérale.

Ceci permet d'augmenter la rigidité longitudinale de la bande de roulement, ce qui améliore le freinage sur sol sec.

Selon une variante, au moins une incision présente une profondeur radiale maximale comprise entre 80% et 95% de la hauteur de la première et/ou la deuxième paroi latérale. Ceci permet d'augmenter la rigidité longitudinale et donc le freinage sur sol mouillé.

Selon un exemple de réalisation, chaque incision a sa première extrémité débouchant dans la première paroi latérale et sa deuxième extrémité débouchant dans la seconde paroi latérale.

Ceci rend le pneu plus souple et se met mieux à plat. En conséquence, l'énergie dissipée à chaque tour de roue diminue.

Selon une variante, chaque incision a sa première extrémité débouchant dans la première paroi latérale et sa deuxième extrémité ne débouchant pas dans la seconde paroi latérale ou que chaque incision a sa première extrémité débouchant dans la deuxième paroi latérale et sa deuxième extrémité ne débouchant pas dans la première paroi latérale.

Ceci permet d'augmenter la rigidité longitudinale, donc le freinage sur sol sec.

Selon une variante, pour une première incision et une deuxième incision qui se succèdent longitudinalement dans le bloc allongé et ayant chacune une première extrémité débouchant dans la première paroi latérale, la deuxième extrémité de la première incision débouche dans la deuxième paroi latérale et la deuxième extrémité de la deuxième incision ne débouche pas dans la deuxième paroi latérale.

Les incisions débouchant sur la seconde paroi latérale forment des sous-blocs dans le bloc allongé. Chaque sous-bloc comprend ainsi une incision qui ne débouche pas sur cette seconde paroi latérale. On favorise ainsi la mise à plat du bloc allongé.

Ceci permet aussi d'augmenter la rigidité longitudinale et en conséquence le freinage sur sol sec.

Avantageusement, les incisions sont partiellement ou totalement chanfreinées sur la surface contact. Ceci permet d'améliorer les performances du pneumatique en freinage sur sol sec.

L'invention porte aussi sur un pneu comportant une bande de roulement telle que décrite précédemment.

### BREVE DESCRIPTION DES DESSINS

D'autres caractéristiques et avantages de l'invention ressortiront de la description suivante, donnée à titre d'exemple, sans caractère limitatif, en regard des dessins annexés dans lesquels :
- la figure 1 représente schématiquement une vue partielle d'une bande de roulement, selon un premier exemple de réalisation de l'invention;
- la figure 2 représente schématiquement une vue agrandie de deux incisions du bloc de la figure 1 à un certain niveau d'usure de la bande de roulement;
- les figures 3 et 4 représentent d'autres vues agrandies du bloc de la figure 1 après un certain niveau d'usure et selon des variantes;
- les figures 5 à 7 illustrent des exemples de profils dans la profondeur de la bande de roulement d'une incision selon l'invention.

### DESCRIPTION DETAILLEE

Dans la description qui va suivre, des éléments sensiblement identiques ou similaires seront désignés par des références identiques.

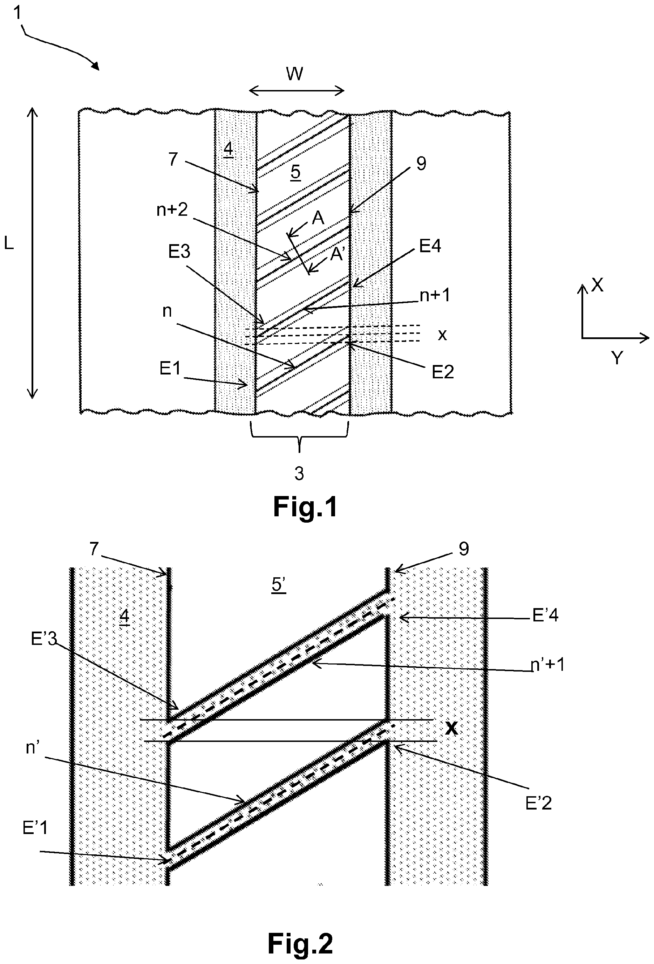

La figure 1 représente une vue partielle d'une bande de roulement 1 d'un pneumatique selon un premier mode de réalisation de l'invention.

La bande de roulement 1 comporte au moins un bloc 3 en matériau caoutchoutique. Le bloc 3 est ici délimité par deux rainures 4 qui ont été ici grisées sur la figure 1 pour favoriser la compréhension de l'invention. Plus particulièrement, le bloc 3 présente une largeur W et une longueur L, cette longueur L étant très supérieure à la largeur W. Par très supérieure, on entend que la longueur L est au moins égale à 5 fois la largeur W. De cette manière, lorsque la bande de roulement 1 est montée sur un pneumatique, le bloc 3 a l'allure d'une bande s'étendant selon une direction circonférentielle X. Cette bande peut s'étendre sur toute la circonférence du pneumatique. En variante, cette bande s'étend sur une partie seulement de cette circonférence.

De plus, le bloc 3 comporte une surface de contact 5 destinée à venir en contact avec un sol et une première paroi latérale 7 et une seconde paroi latérale 9 délimitant cette surface de contact 5.

En outre, le bloc 3 comporte une pluralité d'incisions n, n+1 débouchant sur la surface de contact 5. Les incisions n, n+1 s'étendent selon une direction oblique en débouchant avec leurs premières extrémités respectives E1, E3 sur la première paroi latérale 7 et par leurs deuxièmes extrémités respectives E2, E4 sur la seconde paroi latérale 9.

Les incisions n, n+1 du bloc 3 sont ici orientées dans le même sens, c'est-à-dire que les incisions s'étendent de la première paroi latérale 7 vers la seconde paroi latérale 9 selon un sens positif en X et en Y. Ces incisions sont réparties sur la surface de contact 5 du bloc 3 de sorte que lorsqu'une incision n atteint la seconde paroi latérale 9, une autre incision n+1 débute à partir de la première paroi latérale 7, sensiblement au même niveau sur le bloc 3.

Par « au même niveau x » sur le bloc, on entend une position circonférentielle x déterminée sur ce bloc. En outre, par « sensiblement », on entend qu'il peut exister un faible décalage entre la position circonférentielle des incisions n, n+1. Ce décalage est cependant limité. Il est de manière préférentielle inférieur à 5 % du pas les entre deux incisions n, n+1 délimitant le sous-bloc 8. Pour évaluer la présence ou non d'un tel décalage, on utilisera la notion de fibre neutre associée à chaque incision.

En outre, les incisions n, n+1 ont une forme qui s'élargit au moins partiellement à partir d'une certaine profondeur dans la bande de roulement. Cet élargissement est représenté sur la figure 1 par des pointillés des deux côtés de chaque incision n, n+1.

La figure 2 représente un zoom sur deux incisions n', n'+1 de la figure 1 après un certain niveau d'usure de la bande de roulement. Ces incisions n', n'+1 ont été grisées au même titre que les deux rainures 4 pour favoriser la compréhension de l'invention. Le niveau de ces incisions n', n'+1 est plus bas que la surface de contact 5'. Néanmoins, elles n'ont pas nécessairement le même niveau que les rainures 4.

En outre, comme cela est montré sur la figure 2 la deuxième extrémité E2' de chaque incision n', est en regard sur le bloc allongé 3 de la première extrémité E3' de l'incision n'+1, au x selon la direction circonférentielle X.

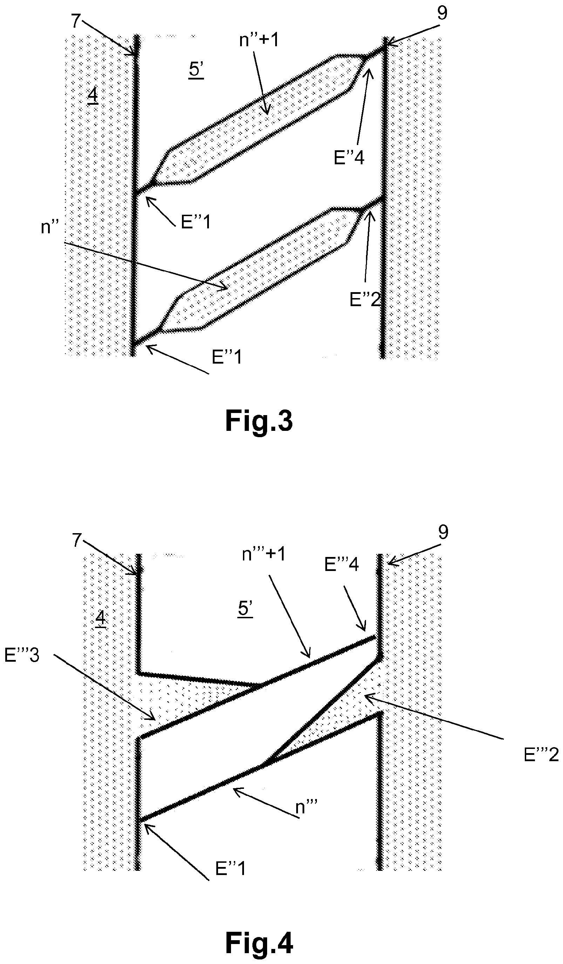

La figure 3 représente une variante de réalisation qui diffère de l'exemple de la figure 2 uniquement par le fait qu'après un certain niveau d'usure les incisions n", n"+1 s'élargissent partiellement sur leur longueur et leurs extrémités respectives E"1, E"2, et E"3, E"4 ne sont pas élargies.

Dans ce cas, même après usure de la bande de roulement, la deuxième extrémité E"2, de la première incision n, est toujours située au même niveau x sur la bande de roulement que la première extrémité E"3 de la deuxième incision.

La figure 4 représente une variante de réalisation qui diffère de exemple de la figures 3 par le fait qu'après un certain niveau d'usure les incisions n''', n'''+1 s'élargissent dans une moitié de leur longueur. En outre, l'élargissement est alterné. Par exemple, sur la figure 4, la deuxième extrémité E'''2 de l'incision n''' et la première extrémité E3''' de l'incision n'''+1 sont élargis de sorte que l'extrémité E"2 est en regard de l'extrémité E'''3, de l'incision n'''+1.

Dans d'autres variantes non illustrées, l'élargissement n'est pas alterné.

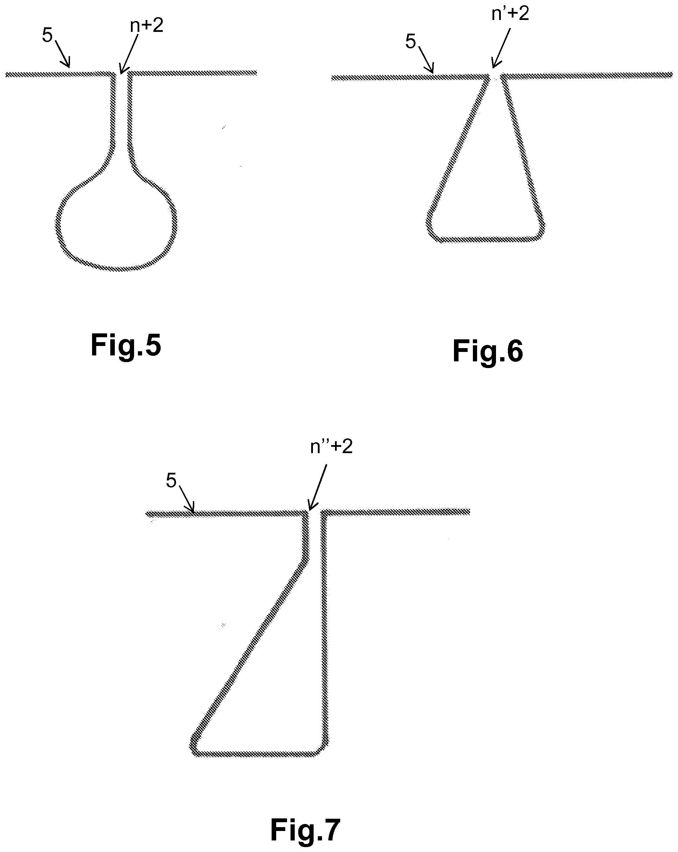

La figure 5 illustre une vue en coupe selon l'axe A-A' de la figure 1 illustrant le profile dans la profondeur de la bande de roulement d'une incision n+2 selon un premier exemple de réalisation. Dans cet exemple de réalisation, l'incision n+2 a la forme d'une goutte d'eau qui ne s'élargit pas jusqu'à une certaine profondeur, puis s'élargie uniformément des deux côtés.

La figure 6 est une variante dans laquelle l'incision n'+2 présente un élargissement progressif dans la profondeur de la bande de roulement.

La figure 7 est une autre variante dans laquelle l'incision n"+2 présente un élargissement asymétrique dans la profondeur de la bande de roulement.

Avantageusement, la largeur des incisions est au moins doublée dans leur partie élargie.

Selon un exemple de réalisation non limitatif, les incisions n', n'+1 à partir d'un certain niveau d'usure de la bande de roulement, se transforment en rainures.

Dans une variante non représentée, les incisions n, n+1 débouchent sur la surface de contact 5 du bloc 3 allongé en formant des traces courbées de courbure C.

Dans une variante non illustrée, les longueurs des incisions n, n+1 sont réduites. Les extrémités E2, E4 sont distantes d'une distance D. Cette distance D présente une composante transversale au moins égale à 10% de la largeur W du bloc allongé.

Dans une variante non illustrée, le bloc allongé 3 comporte une série 14 de incisions obliques n, n+1 débouchant sur la première paroi latérale 7 et s'étendant jusqu'à des extrémités E2, E4 de incisions qui ne débouchent pas sur les parois latérales 7, 9. Les extrémités E2, E4 sont ici situées au niveau d'un plan médian de la bande de roulement.

Les incisions n, n+1 sont réparties sur la surface de contact 5 de sorte que lorsque la incision n atteint son extrémité de incision E2, une autre incision n+1 débute à partir de la première paroi latérale 7, sensiblement à un même niveau x circonférentiel sur le bloc allongé 3.

Ainsi, lorsqu'on projette les incisions n, n+1 selon la direction circonférentielle X, il n'y a pas de superposition d'incisions selon cette direction circonférentielle X. De cette manière, on limite la variation du taux d'entaillement dans le bloc allongé 3 selon cette direction circonférentielle.

On notera également que comme les incisions n, n+1 ne traversent pas le bloc allongé 3, on s'assure d'une bonne rigidité globale du bloc allongé 3.

Dans une variante non illustrée, l'incision n ne débouche pas dans la seconde paroi latérale 9 et l'incision n+1 débouche sur la seconde paroi latérale 9 de manière que le bloc allongé 3 est formé par une pluralité de sous-blocs.

Selon un mode de réalisation non limitatif, au moins une incision présente une profondeur maximale comprise entre 50% et 100% de la hauteur de la première et/ou la deuxième paroi latérale 7, 9. Cette profondeur est mesurée à partir de la surface de contact 5.

Selon une variante, au moins une incision présente une profondeur maximale comprise entre 80% et 95% de la hauteur de la première et/ou de la deuxième paroi latérale 7, 9.

Selon une variante non illustrée, les incisions n, n+1 sont partiellement ou totalement chanfreinées sur la surface de contact 5 du bloc allongé 3.

L'invention n'est pas limitée aux exemples décrits et représentés, diverses modifications peuvent y être apportées sans sortir de son cadre.

Par exemple, on peut varier les formes et longueurs des incisions. En particulier, les exemples illustrés par les figures 1 à 4 montrent des modes de réalisation avantageux dans lesquels chaque incision présente une unique portion qui s'élargit à partir d'un certain niveau d'usure, sur la totalité ou sur une partie de sa longueur. D'autres variantes sont néanmoins possibles, par exemple, des incisions discontinues.

## Revendications

1. Bande de roulement pour pneumatique comportant au moins un bloc (3) allongé en matériau caoutchoutique de largeur W et de longueur L où L est d'au moins 5 fois W, ce bloc allongé s'étendant selon une direction circonférentielle lorsque la bande de roulement (1) est montée sur le pneumatique, chaque bloc allongé (3) comportant une surface de contact (5) destinée à venir en contact avec un sol et une première paroi latérale (7) et une seconde paroi latérale (9) délimitant cette surface de contact (5), le bloc allongé (3) comportant une pluralité d'incisions obliques successives (n, n+1) au nombre de N, et ayant chacune une première extrémité (E1, E3) et une deuxième extrémités (E2, E4), au moins l'une de la première extrémité (E1, E3) et de la deuxième extrémité (E2, E4), débouche sur la première ou la deuxième paroi latérale (7, 9), à partir d'une certaine profondeur dans la bande de roulement, les incisions (n, n +1) s'élargissant au moins partiellement, **caractérisée en ce que,** les incisions (n, n+1) se succèdent longitudinalement sur la surface de contact (5) de manière qu'au moins l'une des extrémités (E1, E2) de l'une des incisions (n) est au même niveau circonférentiel (X) sur le bloc allongé (3) qu'une extrémité (E3, E4) d'une autre incision (n+1) circonférentiellement adjacente à ladite une des incisions (n), un faible décalage entre la position circonférentielle des incisions (n, n+1) étant limité à 5% du pas entre les deux incisions (n, n+1).

2. Bande de roulement selon la revendication 1, **caractérisée en ce que** les incisions s'élargissent pour former des rainures (n', n'+1) et **en ce qu'**au moins une extrémité (E1', E2') de l'une des rainures (n') est en regard sur le bloc allongé (3) d'une extrémité (E3', E4') d'une autre rainure (n'+1).

3. Bande de roulement selon la revendication 2, **caractérisée en ce que** les incisions (n, n+1) ne sont pas élargies à leur première extrémité (E1, E3) et/ou à leur deuxième extrémité (E2, E4).

4. Bande de roulement selon l'une quelconque des revendications 2 ou 3, dans lequel les incisions (n, n+1) sont élargies dans une moitié de leur longueur.

5. Bande de roulement selon la revendication 4, dans lequel l'élargissement est alterné entre deux incisions (n, n+1) se succédant longitudinalement sur la surface de contact.

6. Bande de roulement selon l'une quelconque des revendications 1 à 5, dans lequel la largeur des incisions (n, n+1) est au moins doublée dans leur partie élargie.

7. Bande de roulement selon l'une quelconque des revendications 1 à 5, **caractérisée en ce que** l'élargissement des incisions (n, n+1) est progressif.

8. Bande de roulement selon l'une quelconque des revendications 1 à 5, **caractérisée en ce que** l'élargissement des incisions (n, n+1) est asymétrique.

9. Pneu **caractérisé en ce qu'**il possède une bande de roulement (1) selon l'une des revendications 1 à 8.

## Patentansprüche

1. Laufstreifen für einen Reifen, welcher wenigstens einen lang gestreckten Profilblock (3) aus Kautschukmaterial mit einer Breite W und einer Länge L aufweist, wobei L wenigstens das 5-Fache von W beträgt, wobei sich dieser lang gestreckte Profilblock in einer Umfangsrichtung erstreckt, wenn der Laufstreifen (1) auf dem Reifen angebracht ist, wobei jeder lang gestreckte Profilblock (3) eine Kontaktfläche (5), die dazu bestimmt ist, mit einem Boden in Kontakt zu kommen, und eine erste Seitenwand (7) und eine zweite Seitenwand (9), die diese Kontaktfläche (5) begrenzen, aufweist, wobei der lang gestreckte Profilblock (3) mehrere aufeinander folgende schräge Einschnitte (n, n+1) aufweist, deren Anzahl N beträgt und die jeweils ein erstes Ende (E1, E3) und ein zweites Ende (E2, E4) aufweisen, wobei das erste Ende (E1, E3) und/oder das zweite Ende (E2, E4) in die erste oder die zweite Seitenwand (7, 9) münden, wobei ab einer gewissen Tiefe in dem Laufstreifen die Einschnitte (n, n+1) sich wenigstens teilweise verbreitern,
**dadurch gekennzeichnet, dass** die Einschnitte (n, n+1) auf der Kontaktfläche (5) in Längsrichtung derart aufeinander folgen, dass sich wenigstens eines der Enden (E1, E2) des einen der Einschnitte (n) auf dem lang gestreckten Profilblock (3) auf demselben Umfangsniveau (X) wie ein Ende (E3, E4) eines anderen Einschnitts (n+1) befindet, der dem einen der Einschnitte (n) in Umfangsrichtung benachbart ist, wobei ein geringer Versatz zwischen den Umfangspositionen der Einschnitte (n, n+1) auf 5 % des Abstands zwischen den zwei Einschnitten (n, n+1) begrenzt ist.

2. Laufstreifen nach Anspruch 1, **dadurch gekennzeichnet, dass** sich die Einschnitte verbreitern, um Rillen (n', n'+1) zu bilden, und dadurch, dass sich wenigstens ein Ende (E1', E2') einer der Rillen (n') auf dem lang gestreckten Block (3) gegenüber einem Ende (E3', E4') einer anderen Rille (n'+1) befindet.

3. Laufstreifen nach Anspruch 2, **dadurch gekennzeichnet, dass** die Einschnitte (n, n+1) an ihrem ersten Ende (E1, E3) und/oder an ihrem zweiten Ende (E2, E4) nicht verbreitert sind.

4. Laufstreifen nach einem der Ansprüche 2 oder 3, dass die Einschnitte (n, n+1) auf einer Hälfte ihrer Länge verbreitert sind.

5. Laufstreifen nach Anspruch 4, wobei die Verbreiterung zwischen zwei Einschnitten (n, n+1), die auf der Kontaktfläche in Längsrichtung aufeinander folgen, abwechselnd ausgebildet ist.

6. Laufstreifen nach einem der Ansprüche 1 bis 5, wobei die Breite der Einschnitte (n, n+1) in ihrem verbreiterten Teil mindestens doppelt so groß ist.

7. Laufstreifen nach einem der Ansprüche 1 bis 5, **dadurch gekennzeichnet, dass** die Verbreiterung der Einschnitte (n, n+1) allmählich erfolgt.

8. Laufstreifen nach einem der Ansprüche 1 bis 5, **dadurch gekennzeichnet, dass** die Verbreiterung der Einschnitte (n, n+1) asymmetrisch ist.

9. Reifen, **dadurch gekennzeichnet, dass** er einen Laufstreifen (1) nach einem der Ansprüche 1 bis 8 besitzt.

## Claims

1. Tire tread comprising at least one elongate block (3) of rubber material of width W and length L where L at least 5 times W, this elongated block extending in a circumferential direction (X) when the tread (1) is mounted on the tire, each elongate block (3) comprising a contact surface (5) intended to come into contact with a ground and a first side wall (7) and a second side wall (9) delimiting this contact surface (5), the elongated block (3) comprising a plurality of successive oblique incisions (n, n + 1) numbering N, and each having a first end (EI, E3) and a second end (E2, E4), at least one of the first end (EI, E3) and of the second end (E2, E4), opens onto the first or the second side wall (7, 9) starting from a certain depth in the tread, the incisions (n, n + 1) widening at least partially, **characterized in that** the incisions (n, n +1) follow each other longitudinally on the contact surface (5) so that at least one of the ends (EI, E2) of one of the incisions (n) is at the same circumferential level (x) on the elongated block (3) as one end (E3, E4) of another incision (n +1) adjacent to said one of the incisions (n), a small offset between the circumferential location of the incisions (n, n+1) being limited to 5 % of the pitch between the two incisions (n, n+1).

2. Tread according to Claim 1, **characterized in that** the incisions widen to form grooves (n', n' + 1) and **in that** at least one end (EI', E2') of one grooves (n ') is opposite the elongated block (3) from one end (E3', E4 ') of another groove (n' + 1).

3. Tread according to Claim 2, **characterized in that** the incisions (n, n + 1) are not widened at their first end (EI, E3) and / or at their second end (E2, E4). 3058092 15

4. A tread according to any one of claims 2 or 3, wherein the incisions (n, n + 1) are widened in half their length.

5. A tread according to any one of claims 2 to 4, in which the widening is alternated between two incisions (n, n + 1) following one another longitudinally on the contact surface.

6. Tread according to any one of claims 1 to 5, in which the width of the incisions (n, 10 n + 1) is at least doubled in their widened part.

7. Tread according to any one of Claims 1 to 5, **characterized in that** the widening of the incisions (n, n + 1) is progressive.

8. Tread according to any one of claims 1 to 5, **characterized in that** the widening of the incisions (n, n + 1) is asymmetric.

9. Tire **characterized in that** it has a tread (1) according to one of claims 1 to 8.
